# EUROPÄISCHE PATENTSCHRIFT

(11) **EP 2 716 381 B1**
(45) Veröffentlichungstag und Bekanntmachung des Hinweises auf die Patenterteilung: **28.08.2019**
(21) Anmeldenummer: 13187308.5
(22) Anmeldetag: 04.10.2013
(51) Int. Cl.: B21D 53/30, B23Q 17/22, B60B 3/06

(54) **Verfahren zur Verbesserung der Bearbeitung von Radfelgenrohlingen**
Method for improving the processing of wheel rim blanks
Procédé d'amélioration du traitement d'ébauches de jantes

(30) Priorität: 04.10.2012 AT 10682012
(43) Veröffentlichungstag der Anmeldung: 09.04.2014
(73) Patentinhaber: ALPINE METAL TECH GmbH, 4844 Regau (AT)
(72) Erfinder: Parzmair, Raimund, 4691 Breitenschützing (AT); Höchsmann, Roland, 4861 Gampern (AT)
(74) Vertreter: Burger, Hannes

(56) Entgegenhaltungen:
- EP-A1- 1 830 157
- WO-A1-2008/087668
- DE-U1-202005 004 538
- US-A- 5 653 040
- US-A1- 2007 144 007
- US-A1- 2008 196 563
- US-A1- 2008 228 441
- US-B1- 6 598 917
- US-B1- 6 831 996

## Beschreibung

Die Erfindung betrifft ein Verfahren zur Verbesserung einer zentrischen und planen Aufspannung von Radfelgenrohlingen und mit diesem Verfahren gestaltete Radfelgenrohlinge, insbesondere Rohlinge von Aluminiumradfelgen. Dabei wird im Folgenden aufgrund regionaler Unterschiede in der Nomenklatur der Begriff 'Radfelge' zur Bezeichnung der Felge bzw. des Rades ohne den Reifen verwendet. Ein Verfahren der Art der Erfindung ist aus US 2008/196563 A bekannt.

Beim Guss von Radfelgenrohlingen, insbesondere bei der Verwendung von Leichtmetalllegierungen, beispielsweise basierend auf Aluminium oder Magnesium, kann es bei der Entformung des Radfelgenrohlings aus der Gussform zu geringfügigen Verformungen bzw. Deformationen des Radfelgenrohlings kommen. Aufgrund einer inhomogenen Materialverteilung in den Radfelgenrohlingen und eines dadurch ungleichmäßigen Abkühlens nach dem Entformen aus der Gussform, oder einer anschließenden Wärmebehandlung, kann es ggf. auch vorkommen, dass sich die Randbereiche der Radfelgenrohlinge unter dem Eigengewicht bzw. aufgrund thermischer Spannungen geringfügig verformen.

Bis auf die Stirnseite wird bei einer gegossenen Radfelge in der Regel jede Fläche mechanisch bearbeitet, insbesondere wird die gesamte Umfangskontur in zumeist zwei Bearbeitungsschritten abgedreht oder -gefräst. Mittels eines nachfolgenden dritten Bearbeitungsschrittes werden die Kalotten - und zum Teil auch Tastbohrungen eingebracht.

Da der überwiegende Teil der Radhersteller den Radfelgenrohling (unbearbeitete Radfelge) mit der Sichtseite nach unten in eine Spannvorrichtung einlegen, kommt der Ausrichtung des Radfelgenrohlings vor diesem ersten Spannvorgang eine wesentliche Bedeutung zu. Eine fehlerhafte Ausrichtung der Radfelgenrohlinge beim Einlegen führt dabei unmittelbar zu einer dynamischen Unwucht, also zu einer Taumelbewegung der Sichtseite um die Radfelgenachse. Dabei ergibt sich insbesondere bei großen Radfelgendurchmessern durch die im Bereich bis zu zwei Millimeter liegenden Deformationsabweichungen das Problem, dass dadurch zulässige Grenzen für aufzubringende Wuchtgewichte überschritten werden und somit die Radfelge als Ausschuss zu klassifizieren wäre.

Mit einer Messvorrichtung der NUMTEC-INTERSTAHL GmbH wird beispielsweise der, in der Regel stirnseitige, Umfangsverlauf eines Radfelgenrohlings vermessen und aus dem so gewonnen Umfangsprofil eine mittlere Abweichungsebene bzw. eine mittlere Schwerpunktsverteilung ermittelt.

Bislang wird ein Radfelgenrohling nun so gedreht auf die drei Auflagepunkte der Spannvorrichtung aufgelegt, dass durch die drei Auflagepunkte die mittlere Ebene, der Radfelge möglichst parallel zur Ebene der Spannvorrichtung ausgerichtet ist, dass also eine möglichst gleichmäßige bzw. ausgeglichene Toleranz zwischen den Auflagepunkten und der ermittelten mittleren Ebene gegeben ist.

Um die Sichtseite der Radfelge nicht zu beschädigen, befinden sich diese Auflagepunkte in der Regel am äußeren Ring des Radfelgenrohlings (äußeres Felgenhorn, äußerer Flansch). In diesem Bereich wird der Radfelgenrohling im ersten Bearbeitungsschritt eingespannt, danach wird der Radfelgenrohling um 180 Grad gedreht, sodass nun die Sichtseite nach oben angeordnet ist. In einem zweiten Bearbeitungsschritt wird die Hornzugabe, das zusätzliche Material auf dem Flansch/Horn des Radfelgenrohlings, mit den vorherigen Auflagepunkten abgedreht.

Bei den bisher angewandten Verfahren ist von Nachteil, dass jeder Radfelgenrohling bei jedem Einspannen in die Spannvorrichtung individuell korrekt ausgerichtet werden muss, was einen zusätzlichen Zeitaufwand bedeutet und Fehler bei der Bearbeitung bedingen kann, die zu einem unnötigen Ausschuss führen können. Zusätzlich ist nach dem Stand der Technik die Wahl der Auflagepunkte durch den Winkelversatz der Spannvorrichtung eingeschränkt. Bei einer üblichen 3-Punkt Spannvorrichtung beträgt dieser Winkelversatz 120°, so dass auch die Ermittlung der Auflagepunkte in Bezug zur mittleren Abweichungsebene bzw. mittleren Schwerpunktsverteilung auf diesen Winkelversatz festgelegt bzw. eingeschränkt ist. Daher kann mit dem bekannten Ausrichtungsverfahren stets nur ein lokales Optimum gefunden werden, bei einer ungünstigen Deformation des Radfelgenrohlings kann daher eine bedeutende Fehlausrichtung bestehen bleiben.

Aufgabe der Erfindung ist es, diese Nachteile zu überwinden.

Diese Aufgabe wird nach einem Verfahren gemäß der Ansprüche gelöst, in dem ein Teil des Materials der Hornzugabe, insbesondere der Hornzugabe des äußeren Felgenhorns, vor der Bearbeitung in Form mindestens einer Ausnehmung soweit mechanisch abgetragen wird, dass die zuvor ermittelte mittlere Ebene und/oder die Mittelebene der Sichtseite, auf einfache Weise exakt parallel zur Spannvorrichtung ausgerichtet werden kann, und/oder die Designmitte der Radfelge möglichst genau auf der Achsmitte ausgerichtet werden kann. Die Mittelebene der Sichtseite entspricht dabei nicht zwingend der mittleren Ebene des Rades, sondern ist eine, aufgrund der ermittelten Umfangsabweichung berechnete Ebene der Lage (Ausrichtung) der Sichtseite. Es wird dabei insbesondere nicht die gesamte Sichtseite sondern nur der stirnseitige Umfangsverlauf der Sichtseite erfasst, um daraus einen mittleren Abweichungsverlauf zu ermitteln. Mittels dieses Abweichungsverlaufs - am Umfang des Rads - wird eine Ebene aufspannt, wobei diese Ebene die Mittelebene der Sichtseite ist. Beim Stand der Technik wurden nun drei Punkte im Winkelabstand von 120° ermittelt, bei denen der Abstand von der Umfangsgeometrie, auf der die Radfelge auf der Spannvorrichtung aufliegt, zur Mittelebene möglichst gleich ist, so dass die mittlere Ebene möglichst parallel zur Ebene der Spannvorrichtung ausgerichtet aufliegt. Mit dem gegenständlichen Verfahren kann nun die mittlere Ebene exakt parallel ausgerichtet werden.

Die Abtragung geschieht in dem Zeitintervall zwischen der Herstellung des Radfelgenrohlings, insbesondere nach der letzten Temperaturbehandlung oder sonstigen Erwärmung über 200° C, und der Bearbeitung auf die Endform, insbesondere vor dem Einspannen des Radfelgenrohlings in die Spannvorrichtung zur Abtragung der Hornzugabe.

Eine Abtragung in der Form, dass die zuvor ermittelte mittlere Ebene und/oder die Mittelebene der Sichtseite der Radfelge auf einfache Weise exakt parallel zur Spannvorrichtung ausgerichtet werden kann, erfolgt bevorzugt in der Weise, dass eine Ebene in der Radfelge angenommen wird, welche parallel zu der mittleren Ebene und/oder der Mittelebene der Sichtseite, insbesondere im überschüssigen Material der Hornzugabe, liegt, und jede der betreffenden Ausnehmungen so tief in das Material des Radfelgenrohlings im Rahmen unvermeidbarer Fehlertoleranzen eingebracht wird, ihr Boden mindestens, und zumindest ein Teil des Bodens exakt, an diese Ebene heranreicht. Die Ebene wird im Folgenden auch als Einbringungsebene bezeichnet.

Eine Abtragung in der Form, dass die zuvor ermittelte Designmitte der Radfelge möglichst genau auf der Achsmitte ausgerichtet werden kann, erfolgt bevorzugt in der Weise, dass ein Kreis um die Designmitte der Radfelge angenommen wird, welcher insbesondere im überschüssigen Material der Hornzugabe liegt, und jede der betreffenden Ausnehmungen so tief in das Material des Radfelgenrohlings im Rahmen unvermeidbarer Fehlertoleranzen eingebracht wird, dass ihr Boden mindestens, und zumindest ein Teil des Bodens exakt, an diesen Kreis heranreicht. Der Kreis wird im Folgenden auch als Einbringungskreis bezeichnet.

Erfindungsgemäß wird dabei mindestens eine erste Ausnehmung (Justagepunkt) in das Material eingebracht, vorzugsweise gefräst, wobei die Tiefe und/oder Position jedes Justagepunktes insbesondere derart gewählt ist, dass beim Auflegen des Radfelgenrohlings auf die Auflagepunkte der Spannvorrichtung, der Radfelgenrohling mit seiner mittleren Ebene und/oder die Mittelebene der Sichtseite parallel zur Spannvorrichtung ausgerichtet aufliegt. Bevorzugt beträgt die Anzahl der Justagepunkte mindestens drei.

Obwohl die ersten Ausnehmungen im Folgenden als 'Justagepunkte' bezeichnet werden, sind sie in der Regel flächig gestaltet, können jedoch auch durchaus sehr kleine Abmessungen aufweisen wenn die Spannvorrichtung zur Justage lediglich Dorne aufweist. Es könnte somit auch anstelle von 'Justagepunkten' auch von 'Justageflächen' gesprochen werden.

Die Berührungspunkte aller Justagepunkte mit der Spannvorrichtung befinden sich vorzugsweise alle auf der Einbringungsebene.

Vorzugsweise werden diese Justagepunkte im Bereich des äußeren und/oder des inneren Felgenhorns eingebracht, wobei dazu das Material der Hornzugabe als für die Justagepunkte abzutragendes Material bevorzugt wird, und die Justagepunkte in Aufsicht insbesondere die gleiche Form aufweisen.

Da in den meisten Spannvorrichtungen der Radfelgenrohling von oben aufliegt, liegen die Justagepunkte bevorzugt auf der äußeren Seite des jeweiligen Felgenhornes. In dem Falle, in dem der Radfelgenrohling in der Spannvorrichtung hängend angeordnet wird, sind Justagepunkte an der inneren Seite des jeweiligen Flansches von Vorteil.

Der radiale Abstand aller Justagepunkte vom Zentrum der Felge ist dabei vorzugsweise gleich.

Vorzugsweise sind die Justagepunkte zueinander versetzt angeordnet. Insbesondere liegen benachbarte Justagepunkte so zueinander, dass sie vom Zentrum der Radfelge aus betrachtet einen Winkel von mindestens 10 Grad, vorzugsweise mindestens 60 Grad, besonders bevorzugt zwischen 100 und 140 Grad, bilden. Insbesondere sind die Justagepunkte in jeweils dem gleichen Winkel zueinander versetzt, der sich als Quotient aus 360 Grad geteilt durch die Anzahl der Justagepunkte ergibt. Bei einer bevorzugten Anzahl von drei Justagepunkten wäre dies beispielsweise ein Winkel von 120 Grad.

Nach diesem Bearbeitungsschritt, in dem im Wesentlichen die äußere und innere Kontur des Tiefbetts sowie des hinteren Felgenhorns festgelegt wird, ist mit der sehr genauen Aufspannungsmöglichkeit durch die Justagepunkte gewährleistet, dass die Ausrichtung der Seite des Radfelgenrohlings, z.B. der Sichtseite, in Relation zur späteren Achsmitte der Radfelge möglichst rechtwinklig ist, sodass ein Taumeln der Radfelge aufgrund einer schiefen Achsbohrung verhindert wird.

Neben einer Fehlausrichtung der Mittelebene der Sichtseite in Bezug zur Radfelgenachse, kann beim Einspannen des Radfelgenrohlings auch ein Fehler bei der Ausrichtung des Achsmittelpunktes entstehen. Wiederum aufgrund thermischer Deformation bzw. Dehnungseffekten beim Guss bzw. bei einer nachfolgenden Wärmebehandlung kann es vorkommen, dass der von der Gussform grundsätzlich kreisförmig hergestellte Umfang der Radfelge, insbesondere der Sichtseite der Radfelge, Abweichungen von der kreisrunden Form aufweist.

Beim Aufspannen des Radfelgenrohlings in die Spannvorrichtung wird auch eine Zentrierung vorgenommen, auf der basierend im dritten Bearbeitungsschritt die Kalottenbohrungen und gegebenenfalls die sogenannten Tastbohrungen eingebracht werden. Daher führt eine fehlerhafte Zentrierung des Radfelgenrohlings unweigerlich zu einer außermittigen Anordnung der Passung (Radnabe) und damit auch der Kalotten- bzw. Tastbohrungen. Aufgrund der dadurch resultierenden unsymmetrischen Massenverteilung führt dies direkt zu einer statischen Unwucht.

Daher wird in einer weiteren bevorzugten Ausführungsform alternativ oder zusätzlich zur Bestimmung der Ausrichtung der Mittelebene der Sichtseite ein Umfangsprofil, insbesondere ein Umfangsprofil der Hornzugabe, ermittelt. Erfindungsgemäß wird mindestens eine zweite Ausnehmung (Zentrierpunkt) in das Material eingebracht, vorzugsweise gefräst. Die Tiefe und/oder die Position jedes Zentrierpunktes insbesondere ist derart gewählt, so dass beim Einspannen des Radfelgenrohlings in die diesbezüglichen Spannpunkte der Spannvorrichtung, die Designmitte der Radfelge möglichst genau auf der Achsmitte zu liegen kommt. Bevorzugt beträgt die Anzahl der Zentrierpunkte mindestens drei.

Obwohl die zweiten Ausnehmungen im Folgenden als 'Zentrierpunkte' bezeichnet werden, sind sie ebenfalls in der Regel flächig gestaltet, können jedoch auch durchaus sehr kleine Abmessungen aufweisen wenn die Spannvorrichtung zur Justage lediglich Dorne aufweist. Es könnte somit auch anstelle von 'Zentrierpunkten' auch von 'Zentrierflächen' gesprochen werden.

Die Berührungspunkte aller Zentrierpunkte mit der Spannvorrichtung befinden sich vorzugsweise alle auf dem Einbringungskreis.

Vorzugsweise werden diese Zentrierpunkte im Bereich des äußeren und/oder inneren Felgenhorns eingebracht, wobei dazu das Material der Hornzugabe als für die Zentrierpunkte abzutragendes Material bevorzugt wird.

Bevorzugt wird dabei, dass die Zentrierpunkte umfangsseitig, also in die von dem Zentrum der Radfelge aus gesehen äußeren Kante des jeweiligen Felgenhorns, insbesondere in dem äußeren und/oder inneren Felgenhorn, eingebracht werden (Lauffläche), oder dass die Zentrierpunkte auf der äußeren oder inneren Seite des jeweiligen Felgenhornes eingebracht werden, also stirnseitig oder der Sichtseite abgewandten Seite.

Vorzugsweise sind die Zentrierpunkte zueinander versetzt angeordnet. Insbesondere liegen benachbarte Zentrierpunkte so zueinander, dass sie vom Zentrum der Radfelge aus betrachtet einen Winkel von mindestens 10 Grad, vorzugsweise mindestens 60 Grad, besonders bevorzugt zwischen 100 und 140 Grad bilden. Insbesondere sind die Zentrierpunkte in jeweils dem gleichen Winkel zueinander versetzt, der sich als Quotient aus 360 Grad geteilt durch die Anzahl der Zentrierpunkte ergibt. Bei einer bevorzugten Anzahl von drei Zentrierpunkten wäre dies beispielsweise ein Winkel von 120 Grad.

Erfindungsgemäß sind die Zentrierpunkte zu den Justagepunkten versetzt angeordnet. Insbesondere liegen die Zentrierpunkte so zu benachbarten Justagepunkten, dass sie vom Zentrum der Radfelge aus betrachtet mit diesen einen Winkel von mindestens 5 Grad, vorzugsweise mindestens 30 Grad, besonders bevorzugt zwischen 50 und 70 Grad bilden. Insbesondere liegt jeder Zentrierpunkt zwischen zwei Justagepunkten, insbesondere auf der Winkelhalbierenden des Winkels zwischen den beiden Justagepunkten. Bei einer bevorzugten Anzahl von drei Zentrierpunkten und drei Justagepunkten, die regelmäßig verteilt angeordnet sind, wäre dies beispielsweise ein Winkel von 60 Grad zwischen jedem Justagepunkt zu den benachbarten Zentrierpunkten.

Diese versetzte Anordnung ist bei Spannvorrichtungen vorteilhaft, bei denen verschiedenen Spannbacken unterschiedliche Spannrichtungen möglich machen. Zentriert wird durch ein symmetrisches, radiales Zusammenfahren der Spannbacken deren Auflageflächen auf den Zentrierpunkten liegen. Ist das Rad zentriert, schwenken Klammern ein und klemmen das Rad mit den Justagepunkten auf die diesbezüglichen Auflageflächen der Spannvorrichtung.

Bevorzugt sind die Justagepunkte und/oder die Zentrierpunkte an der Seite der Radfelge angebracht, die zuerst in die Spannvorrichtung eingelegt wird. In der Regel ist dies die Stirnseite der Radfelge mit der Sichtseite.

Es kann aber je nach der Art der Bearbeitung bevorzugt sein, die Justagepunkte und/oder die Zentrierpunkte an beiden Seiten der Radfelge anzubringen.

Solchermaßen geformte Radfelgenrohlinge bieten den Vorteil, dass sie ohne eine Vermessung oder zusätzliche Justageschritte einfach in eine Spannvorrichtung zur Bearbeitung eingebracht werden können und aufgrund ihrer Zentrierpunkte und/oder Justagepunkte jeder dieser Radfelgenrohlinge automatisch korrekt in der Spannvorrichtung liegt. Insbesondere wird kann der Massenschwerpunkt durch die Zentrierpunkte sehr genau zentrisch in der Spannvorrichtung ausgerichtet werden, um auf diese Weise sowohl die statische als auch die dynamische Unwucht zu minimieren.

Die Abmessungen der Spannvorrichtung, in der die Radfelgenrohlinge zur Bearbeitung eingespannt werden, sind bekannt. Damit sind auch sämtlichen Berührungspunkte der Spannvorrichtung mit einem Radfelgenrohling bekannt. Des Weiteren sind die Abmessungen der fertigen Radfelge bekannt und durch die Vermessung des Radfelgenrohlings und dem Vergleich der Abmessungen der fertigen Radfelge auch die überschüssigen Materialanteile.

Aus diesem Grunde ist es möglich, an sämtlichen Bereichen oder einem Teil dieser Bereiche, mit denen der Radfelgenrohling mit der Spannvorrichtung in Berührung kommt, Ausnehmungen im Radfelgenrohling zu erzeugen, welche einen solchermaßen gestalteten Radfelgenrohling in der Spannvorrichtung bei Auflage der Bereiche mit den Ausnehmungen auf den Auflagepunkten mit seiner mittleren Ebene und/oder der Mittelebene der Sichtseite parallel zur Spannvorrichtung ausgerichtet orientieren, bzw. beim Einspannen des Radfelgenrohlings in die diesbezüglichen Spannpunkte der Spannvorrichtung, die Designmitte der Radfelge auf der Achsmitte orientieren.

Während der Bearbeitung, die zur abschließenden Formung der Radfelgen erfolgt, werden bevorzugt die Zentrierpunkte und/oder die Justagepunkte entfernt, so dass durch die Bearbeitungsschritte zur Bildung der fertigen Radfelge aus dem Rohgussteil diese Punkte an der fertigen Radfelge nicht mehr zu erkennen sind.

Dazu ist bevorzugt, dass jeder Zentrierpunkt und/oder jeder Justagepunkt nicht über die Hornzugabe, das Material, das bei der Bearbeitung entfernt wird, herausreicht und daher nicht in das Material der bearbeiteten Radfelge hineinreicht.

Der Teil des Materials der Hornzugabe, der zur Formung der fertigen Radfelge abzutragen ist (Überschussmaterial, bzw. Schutzhorn), ist nach der Vermessung der Radfelge sehr einfach zu bestimmen, da die Form der fertigen Radfelge und die Form des Radfelgenrohlings bekannt ist. Die ersten und zweiten Ausnehmungen sind insbesondere so bemessen, dass sie ausschließlich durch Abtragungen eines Teils dieses Überschussmaterials geformt werden und dass kein Material der späteren Radfelge dafür abgetragen wird.

Beim Aufspannen des Radfelgenrohlings auf eine Spannvorrichtung wird in der Regel zuerst die Zentrierung, insbesondere mit Hilfe der Zentrierpunkte durchgeführt, anschließend wird die Radfelge mit einschränkenden Halteklammern mit den Justagepunkten auf den Auflagepunkten gespannt. Dabei sind die Justagepunkte so geformt, dass sie alle Berührungspunkte mit den Auflagepunkten der Spannvorrichtung beinhalten.

Da eine Spannvorrichtung in der Regel mehrere Berührungspunkte mit dem Radfelgenrohling aufweist, und das System durch die annähernd runde Form des Radfelgenrohlings rotationssymmetrisch ist, sind in einer bevorzugten Ausführungsform die Justagepunkte dermaßen geschaffen, dass das verbliebene überschüssige Material unter jedem Justagepunkt gleich dick ist oder kein überschüssiges Material mehr vorhanden ist, also zwischen dem Grund der Ausnehmung für jeden Justagepunkt und dem im Rohling liegenden Material der fertigen Felge für jeden Justagepunkt die selbe Materialdicke an überschüssigen Material liegt oder die Ausnehmung bis an die fertige Radfelge heranreicht. Gleiches gilt vorzugsweise auch für die Zentrierpunkte.

Auf diese Weise ist es unerheblich, welche rotatorische Orientierung die Radfelge in der Spannvorrichtung hat.

Die Form des Bodens einer jeden Ausnehmung richtet sich in der Regel nach der Art der Auflage auf der Spannvorrichtung.

In einer bevorzugten Ausführungsform ist jede der Ausnehmungen in ihrem Tiefenprofil bevorzugt rein konvex oder mit ebenem Boden gestaltet. Dies bedeutet, dass sich keine Erhöhungen innerhalb der Ausnehmung befinden.

In einer weiteren Ausführungsform weist der Boden mindestens einer der Ausnehmungen, insbesondere aller Ausnehmungen, Erhöhungen auf, die dermaßen geformt sind, dass ihre obersten Punkte oder Flächen, im Rahmen der Fehlertoleranzen exakt auf der Einbringungsebene oder dem Einbringungskreis liegen und der restliche Teil des Bodens tiefer in das Material, insbesondere das überschüssige Material, der Radfelge hineinragt. Dies hat den Vorteil, dass insbesondere bei einer großen Fläche der Ausnehmungen und einer damit verbundenen großen Auflagefläche auf der Spannvorrichtung, die Anzahl der Berührungspunkte bzw. die Berührungsfläche verringert wird. Dies hat zur Folge, dass eine exakte Justierung des Radfelgenrohlings auch gewährleistet ist, wenn sich unbeabsichtigt Schmutz oder Reste einer vorangegangenen Bearbeitung auf den Auflagepunkten der Spannvorrichtung befindet.

Bevorzugt verjüngen sich die Erhöhungen in Richtung der Außenfläche des Radfelgenrohlings, sind also konisch.

Die Form der Ausnehmungen bei Aufsicht ist bevorzugt konvex, was bedeutet, dass keine Ecke oder Rundung seitlich in die Ausnehmung hineinragt.

Um ein Spiel des Radfelgenrohlings zu gewährleisten, was insbesondere bei einer Zentrierung mit anschließender Ausrichtung der Mittelebene der Sichtseite oder der mittleren Ebene von Vorteil ist, ist es bevorzugt, die Bodenfläche mindestens einer, vorzugsweise aber jeder, Ausnehmung eben oder mit den oben genannten Erhöhungen zu gestalten und/oder vorzugsweise den Flächenbereich der Bodenfläche größer zu gestalten als die Auflagefläche auf der Spannvorrichtung. Insbesondere ist die Bodenfläche in jeder Richtung zwischen 0,01 mm und 10 mm, bevorzugt maximal 5 mm, besonders bevorzugt maximal 3 mm größer als die Auflagefläche auf der Spannvorrichtung. Dies gilt bevorzugt für die Justagepunkte.

In einer bevorzugten Ausführungsform reicht mindestens eine der Ausnehmungen bis an den Rand der betreffenden Fläche des Felgenhornes heran und weist dort im Randbereich kein Felgenmaterial auf.

In einer weiteren bevorzugten Ausführungsform ist mindestens einer der Ränder der Ausnehmung zum Boden hin abgerundet oder schräg gestaltet, so dass sich die Querschnittsfläche der Ausnehmung mit zunehmender Tiefe verkleinert, sich die Ausnehmung zu ihrem Boden hin also verjüngt. Dies hat den Vorteil, dass ein Einpassen der Ausnehmung in die Auflagepunkte der Spannvorrichtung auf diese Weise erleichtert wird.

Obwohl in der vorangehenden Beschreibung von 'ersten' und 'zweiten' Ausnehmungen gesprochen wird, ist dies nicht auf die zeitliche Abfolge der Einbringung dieser Ausnehmungen bezogen. Bevorzugte Reihenfolgen sind, zuerst die ersten Ausnehmungen und dann die zweiten Ausnehmungen einzubringen, zuerst die zweiten Ausnehmungen und dann die ersten Ausnehmungen einzubringen, die Ausnehmungen wechselweise während einer relativen Drehung des betreffenden Werkzeugs um den Radfelgenrohling einzubringen oder alle oder einen Teil der Ausnehmungen gleichzeitig einzubringen, wobei dies mit dem vorangehenden Einbringungsmodus kombiniert werden kann, so dass jeweils ein Paar bestehend aus einem Justagepunkt und einem Zielpunkt gleichzeitig eingebracht wird, der Radfelgenrohling gedreht wird und dann das nächste Paar eingebracht wird.

Beispiele zu dem erfindungsgemäßen Verfahren und den erfindungsgemäßen Radfelgenrohlingen sind in den Abbildungen dargestellt und werden im Folgenden näher erläutert.
- Fig. 1: zeigt eine Radfelge in Seitenansicht;
- Fig. 2: stellt ein Felgenhorn mit Hornzugabe dar;
- Fig. 3: a) bis c) stellen jeweils ein Felgenhorn mit einem Zentrier- und einem Justagepunkt dar;
- Fig. 4: zeigt einen Radfelgenrohling in Aufsicht;
- Fig. 5: a) bis d) zeigen eine weitere Ausführungsform mit einem kombinierten Zentrier- und Justagepunkt.

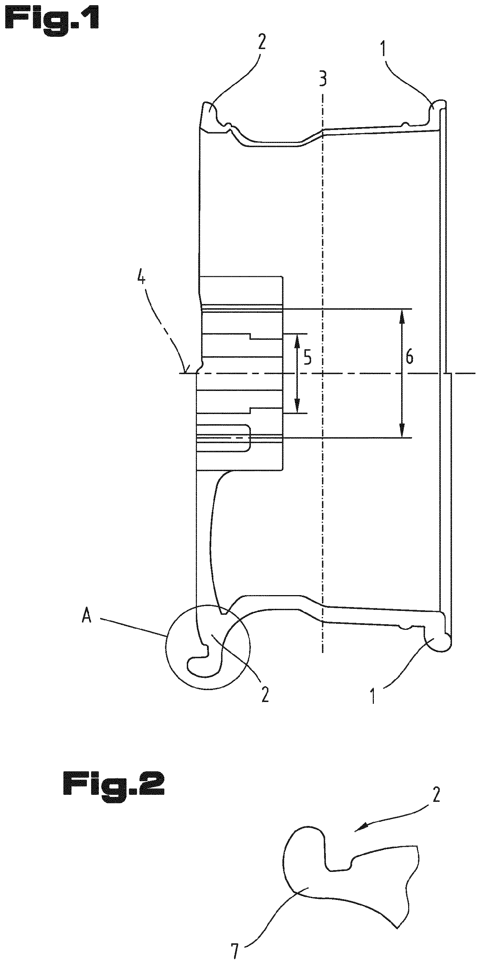

Figur 1 zeigt eine Radfelge mit dem inneren Felgenhorn 1, welches nach dem Einbau der Radfelge im Auto an der Fahrzeug zugewandten Seite liegt und dem äußeren Felgenhorn 2, welches an der Sichtseite der Felge liegt. Als gestrichelte Linie ist die Lage der mittleren Ebene 3 in der Radfelge angedeutet. Die Mittelebene der Sichtseite ist nicht dargestellt, liegt jedoch in diesem Fall parallel zur mittleren Ebene ungefähr auf der Höhe des äußeren Felgenhorns. Im Zentrum der Felge befindet sich die Auflagefläche auf die Achse 4, die Achsbohrung 5 und die Schraubenbohrungen auf einem Ring, dessen Durchmesser 6 ebenfalls dargestellt ist. Das mit einem Kreis A versehene Felgenhorn des Radfelgenrohlings ist in den Abbildungen 2, 3 und 5 in Vergrößerung dargestellt.

In der Figur ist die Radfelge oberhalb der Radachse nach Durchführung der Bearbeitungsschritte dargestellt, Unterhalb der Radachse ist der Felgenrohling dargestellt. Deutlich erkennbar sind die größere Wandstärke, sowie die noch nicht bearbeitete Kontur der Lauffläche. Ferner ist das am Felgenrohling vorhandene Schutzhorn erkennbar.

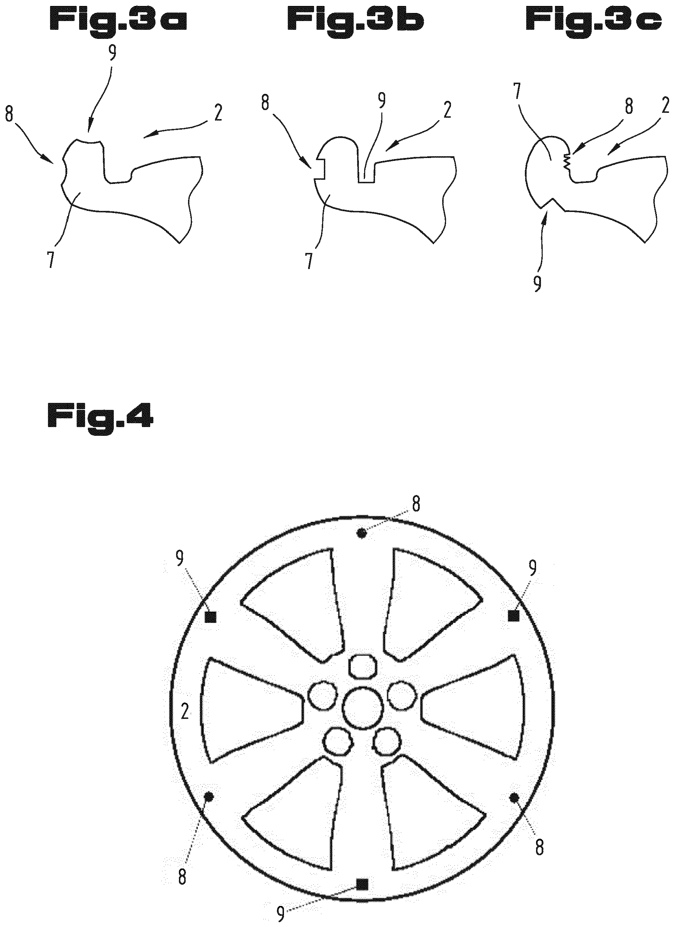

In Figur 2 ist die Hornzugabe 7 auf einem der Felgenhörner 1 dargestellt. Durch Abnahme des Materials der Hornzugabe 7, z.B. durch einen Fräsprozess, wird ein Justagepunkt 8 und ein Zentrierpunkt 9, hier auf der Lauffläche liegend, erzeugt, wie in den Figuren 3a - 3c dargestellt ist. Es wird hiermit ausdrücklich darauf hingewiesen, dass die Form der Hornzugabe, wie sie in den Figuren 2 - 5 dargestellt ist, lediglich beispielhaft zu sehen ist. Insbesondere wird die tatsächliche Form der Hornzugabe auf den jeweiligen Fertigungsprozess abgestimmt sein, insbesondere auf die verwendete Spannvorrichtung.

Dabei liegt in Figur 3a der Justagepunkt 8 auf der Außenseite des Radfelgenrohlings und reicht nicht an das Material der späteren Radfelge heran, wie deutlich an der schwarzen Färbung des Materials des Überschusses schwarz zwischen dem Boden der Ausnehmung und dem schraffierten Materialanteil der späteren fertigen Radfelge zu erkennen ist, und der Zentrierpunkt 9 ist auf der Lauffläche des Radfelgenrohlings angeordnet und reicht bis an das Material der späteren fertigen Radfelge heran, ohne in dieses Material hineinzuragen. Die Ausnehmungen sind dabei in ihrem Tiefenprofil rund ausgearbeitet.

In Figur 3b liegt der Justagepunkt 8 an der äußersten Stelle des Felgenhorns, wobei das Material der Hornzugabe über die gesamte Breite dieses Flächenanteils eben abgetragen wurde. Der Zentrierpunkt 9 liegt an der inneren Lauffläche und ist ebenfalls mit einem flachen Bodenbereich versehen.

In Figur 3c liegt der Justagepunkt 8 an der Innenseite des Felgenhorns und ist so ausgestaltet, dass er drei konische Strukturen auf der Bodenfläche aufweist. Die obersten Punkte dieser Strukturen liegen auf der Einbringungsebene, der restliche Bodenbereich ist tiefer in das Material eingebracht. Zusätzlich weist die Ausnehmung abgeschrägte Wände auf. Der Zentrierpunkt 9 ist als keilförmige Ausnehmung gestaltet, in die beispielsweise ein Dorn der Spannvorrichtung eingeführt werden kann. Die Position ist hier an der gegenüberliegenden Seite der Lauffläche des Felgenhorns.

Figur 4 zeigt die Aufsicht auf einen Radfelgenrohling mit Justgepunkten 8 und Zentrierpunkten 9, welche auf dem Felgenhorn jeweils versetzt zueinander angeordnet sind. Von dem Zentrum des Rades aus betrachtet beträgt der Winkel zwischen den benachbarten Punkten 60 Grad und der Winkel zwischen den benachbarten Zentrierpunkten oder benachbarten Justagepunkten jeweils 120 Grad.

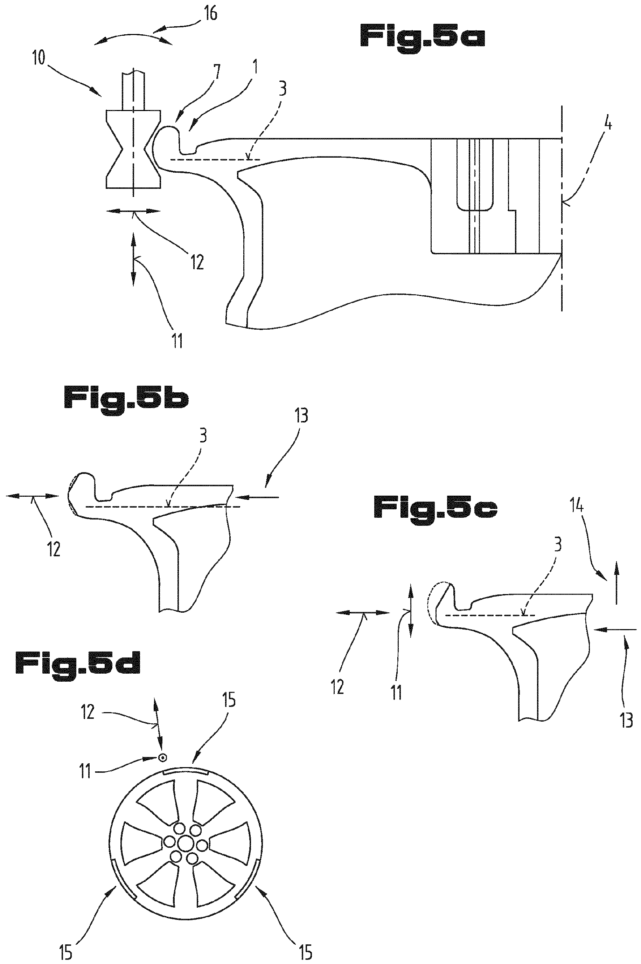

Figuren 5 a) bis d) zeigen eine weitere mögliche Ausführungsform, bei der aufgrund der Gestaltung der Auflageflächen, gleichzeitig eine Zentrierung und eine Ausrichtung durchgeführt werden kann. In Figur 5a ist das Detail A aus Figur 1 dargestellt.

In der Figur 3 wurde der Justagepunkt 8 und der Zentrierpunkt 9 getrennt voneinander im Bereich der Hornzugabe 7 des Felgenhorns angeordnet. Durch ein anderes Bearbeitungswerkzeug und eine neue Ausgestaltung der Auflageflächen, kann nun die Zentrierung und Ausrichtung kombiniert werden, wie dies in den Figuren 5 dargestellt ist. Als Werkzeug findet bspw. ein Fräser 10 mit einem Schwalbenschwanz-Profil Verwendung, welcher in einer ersten 11 und zweiten 12 Zustellrichtung relativ zur Hornzugabe 7 des Radfelgenrohlings verfahren werden kann.

Zum Zwecke der Beschreibung wurde die mittlere Ebene 3 im Bereich des Felgenhorns dargestellt. Durch Bewegen des Fräsers 10 in der ersten Zustellrichtung 11 wird der Justagepunkt ausgebildet, der Radfelgenrohling wird also bezüglich der mittleren Ebene ausgerichtet. Durch Bewegen des Fräsers 10 in der zweiten Zustellrichtung 12 wird der Zentrierpunkt ausgebildet, der Radfelgenrohling also bezüglich seiner Achse 4 ausgerichtet.

Die Spannvorrichtung zur Aufnahme des Radfelgenrohlings weist in diesem Fall eine Klemmvorrichtung mit einem, dem Fräser entsprechenden, Schwalbenschwanz-Profil auf. Die Profilform ist beispielhaft gewählt, insbesondere kann jede Profilform gewählt werden, welche mittels zweier Zustellrichtungen, sowohl eine Ausrichtung der Lage der mittleren Ebene, als auch eine Ausrichtung der Zentrierung ermöglicht. Die Schwalbenschwanzform hat den Vorteil, dass bei der Aufnahme des Radfelgenrohlings in der Spannvorrichtung, durch die beiden bearbeiteten Flächen, automatisch eine Ausrichtung und formschlüssige Klemmung möglich ist. Als Fräser kann neben einem Schwalbenschwanz-Fräser auch ein Kegelprofil- oder ein Schaftfräser verwendet werden, in einem solchen Fall sind die beiden Bearbeitungsflächen getrennt voneinander zu bearbeiten. Bei Verwendung zweier Fräser ist wiederum eine gleichzeitige Bearbeitung möglich.

Figur 5b zeigt eine bearbeitete Hornzugabe, bei der der Fräser in der zweiten Zustellrichtung 12 die Hornzugabe bearbeitet hat. Mit diesem Bearbeitungsschritt wurde also nur die Position der Radachse 4 beeinflusst. Insbesondere wird der Radfelgenrohling beim Einlegen in die Spannvorrichtung ein wenig in Richtung 13 der Spannvorrichtung verschoben.

Bei der in Figur 5c dargestellten Situation wurde die Hornzugabe vom Fräser in beiden Zustellrichtungen bearbeitet. Erkennbar ist, dass in erster Zustellrichtung 11 die Hornzugabe (strichlierter Umfang) deutlich abgetragen wurde. Beim Einlegen des Radfelgenrohlings in die Spannvorrichtung, wird die mittlere Ebene 3 in Richtung 14 nach oben wandern, Zusätzlich wurde durch Bearbeitung in der zweiten Zustellrichtung 12 auch eine Fehlausrichtung der Radachse korrigiert.

Wie in Figur 5d dargestellt, werden bei dieser Ausführung die Ausnehmungen 15 bzw. Fräsungen umfangsseitig (radial) angebracht, insbesondere wiederum mit einem Winkelversatz von 120° in Bezug zur Radachse. Da die Ausnehmungen in Radialrichtung angebracht werden müssen und dabei ein Versatz in erster 11 und/oder zweiter 12 Zustellrichtung eingehalten werden muss, werden die Ausnehmungen 15 bevorzugt von einer NC-gesteuerten Bearbeitungsmaschine durchgeführt, um die erforderlichen Toleranzen einhalten zu können.

Neben einer Bewegung des Fräsers 10 in der ersten 11 und zweiten 12 Zustellrichtung, kann in einer weiteren möglichen Ausbildung die Achse des Fräsers 10 auch noch verschwenkt werden. Beispielsweise kann der Fräser 10 in der zweiten Zustellrichtung 12 bewegt werden und zusätzlich in eine Richtung 16 verschwenkt werden. Bevorzugt wird die Verschwenkrichtung 16 in der Ebene liegen, die durch die zweite Zustellrichtung 12 und die Radachse 4 aufgespannt wird. In der Darstellung entspricht dies dem Zeichenblatt. Als Schwenkpunkt kann bspw. der Punkt auf der Rotationsachse des Fräsers auf Höhe seines Einschnürungspunktes gesehen werden. Zusätzlich, oder alternativ, kann der Fräser 10 auch noch in einer zweiten Richtung verschwenkt werden, welche Richtung normal auf die Verschwenkrichtung 16 ausgerichtet ist. Aus Darstellungsgründen ist dies in der Figur nicht gezeigt, der Fräser 10 würde um die Richtung der zweiten Zustellachse 12 verschwenkbar sein. Durch diese Verschwenkmöglichkeiten wird eine einfache und sichere Anbringung der Zentrier- und/oder Justagepunkte erreicht und somit eine effizientere Ausrichtung des Radfelgenrohlings ermöglicht. Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Des Weiteren können auch Einzelmerkmale oder Merkmalskombinationen aus den gezeigten und beschriebenen unterschiedlichen Ausführungsbeispielen für sich eigenständige Ausführungsformen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des gegenständlichen Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es können also auch Ausführungsvarianten, die durch Kombinationen einzelner Details der dargestellten und beschriebenen Ausführungsvariante möglich sind, vom Schutzumfang mit umfasst werden, wobei der Schutzumfang durch den Gegenstand der Ansprüche festgelegt wird.

Der Ordnung halber sei abschließend darauf hingewiesen, dass zum besseren Verständnis des Verfahrens bzw. der Ausrichtmerkmale diese bzw. deren Bestandteile teilweise unmaßstäblich und/oder vergrößert und/oder verkleinert dargestellt wurden.

### Bezugszeichenaufstellung

- 1: Inneres Felgenhorn
- 2: Äußeres Felgenhorn
- 3: Mittlere Ebene
- 4: Achse
- 5: Achsbohrung

- 6: Durchmesser
- 7: Hornzugabe
- 8: Justagepunkt
- 9: Zentrierpunkt
- 10: Fräser

- 11: Erste Zustellrichtung
- 12: Zweite Zustellrichtung
- 13: Richtung
- 14: Richtung
- 15: Ausnehmung

- 16: Verschwenkrichtung

## Patentansprüche

1. Verfahren zur Verbesserung der Bearbeitung von Radfelgenrohlingen bei einer Aufspannung auf eine Spannvorrichtung, wobei nach der Herstellung des Radfelgenrohlings und vor der Bearbeitung des Radfelgenrohlings auf die Endform
- der Radfelgenrohling vermessen und dabei zumindest dessen mittlere Ebene (3), und/oder die Mittelebene der Sichtseite, und/oder dessen Designmitte ermittelt wird;
- das Material der Hornzugabe (7) des Radfelgenrohlings in Form von mindestens zwei Ausnehmungen mechanisch abgetragen wird, wobei
mindestens eine erste Ausnehmung (Justagepunkt (8)) in das Material eingebracht wird, wobei die Tiefe und/oder Position jedes Justagepunktes (8) derart gewählt ist, dass beim Auflegen des Radfelgenrohlings auf die Spannvorrichtung und Berührung der Ausnehmung(en) mit mindestens einem Auflagepunkt der Spannvorrichtung, die zuvor ermittelte mittlere Ebene (3) und/oder die Mittelebene der Sichtseite parallel zur Spannvorrichtung ausgerichtet ist, und
mindestens eine zweite Ausnehmung (Zentrierpunkt (9)) in das Material eingebracht wird, wobei die Tiefe und/oder die Position jedes Zentrierpunktes (9) derart gewählt ist, so dass beim Einspannen des Radfelgenrohlings in die diesbezüglichen Spannpunkte der Spannvorrichtung, die Designmitte der Radfelge auf die Achsmitte ausgerichtet ist, **dadurch gekennzeichnet, dass** die Justagepunkte (8) zu den Zentrierpunkten (9) in Umfangsrichtung der Radfelge versetzt zueinander angeordnet sind.

2. Verfahren nach Anspruch 1, **dadurch gekennzeichnet, dass** die mindestens eine Ausnehmung punktförmig oder flächig gestaltet ist.

3. Verfahren nach Anspruch 2, **dadurch gekennzeichnet, dass** die Justagepunkte (8) und/oder die Zentrierpunkte (9) in den Bereich des äußeren und/oder inneren Felgenhorns (1, 2), eingebracht werden, wobei bevorzugt das Überschussmaterial der Hornzugabe (7) als für die Justagepunkte (8) und/oder Zentrierpunkte (9) abzutragendes Material bevorzugt wird.

4. Verfahren nach einem der Ansprüche 2 oder 3, **dadurch gekennzeichnet, dass** die Justagepunkte (8) zueinander versetzt angeordnet sind und insbesondere benachbarte Justagepunkte (8) so zueinander liegen, dass sie vom Zentrum der Radfelge aus betrachtet einen Winkel von mindestens 10 Grad, vorzugsweise mindestens 60 Grad, besonders bevorzugt zwischen 100 und 140 Grad, bilden, und besonders bevorzugt die Justagepunkte (8) in jeweils dem gleichen Winkel, der sich als Quotient aus 360 Grad geteilt durch die Anzahl der Justagepunkte (8) ergibt, zueinander versetzt sind.

5. Verfahren nach einem der Ansprüche 2 oder 3, **dadurch gekennzeichnet, dass** die Zentrierpunkte (9) zueinander versetzt angeordnet sind und insbesondere benachbarte Zentrierpunkte (9) so zueinander liegen, dass sie vom Zentrum der Radfelge aus betrachtet einen Winkel von mindestens 10 Grad, vorzugsweise mindestens 60 Grad, besonders bevorzugt zwischen 100 und 140 Grad bilden und besonders bevorzugt die Zentrierpunkte (9) in jeweils dem gleichen Winkel, der sich als Quotient aus 360 Grad geteilt durch die Anzahl der Zentrierpunkte (9) ergibt, zueinander versetzt sind.

6. Verfahren nach einem der Ansprüche 2 bis 5, **dadurch gekennzeichnet, dass** die Zentrierpunkte (9) so zu benachbarten Justagepunkten (8) liegen, dass sie vom Zentrum der Radfelge aus betrachtet mit diesen einen Winkel von mindestens 5 Grad, vorzugsweise mindestens 30 Grad, besonders bevorzugt zwischen 50 und 70 Grad bilden und besonders bevorzugt jeder Zentrierpunkt (9) zwischen zwei Justagepunkten (8) auf der Winkelhalbierenden des Winkels zwischen den beiden Justagepunkten (8) liegt.

7. Verfahren nach einem der Ansprüche 2 bis 5, **dadurch gekennzeichnet, dass** die Zentrierpunkte (9) radial vom Zentrum aus gesehen auf einer Linie mit den Justagepunkten (8) angeordnet sind.

8. Verfahren nach einem der vorangehenden Ansprüche, **dadurch gekennzeichnet, dass** während der Bearbeitung, die zur abschließenden Formung der Radfelgen erfolgt, jede der Ausnehmungen entfernt wird, so dass durch die Bearbeitungsschritte zur Bildung der fertigen Radfelge aus dem Rohgussteil keine der Ausnehmungen an der fertigen Radfelge mehr zu erkennen sind.

9. Verfahren nach einem der vorangehenden Ansprüche, **dadurch gekennzeichnet, dass** mindestens eine der Ausnehmungen, insbesondere jede der Ausnehmungen nicht über das Überschussmaterial der Hornzugabe (7) herausreicht und somit nicht in das Material der fertigen Radfelge hineinreicht, und insbesondere die ersten und/oder zweiten Ausnehmungen so bemessen sind, dass sie ausschließlich durch Abtragungen eines Teils dieses Überschussmaterials geformt werden und dass kein Material der späteren Radfelge dafür abgetragen wird.

10. Radfelgenrohling, **dadurch gekennzeichnet, dass** er nach einem Verfahren nach einem der vorangehenden Ansprüchen geformte Ausnehmungen aufweist.

## Claims

1. A method for improving the processing of wheel rim blanks during clamping onto a clamping apparatus, wherein after manufacturing of the wheel rim blank and prior to the processing of the wheel rim blank to the final shape
- the wheel rim blank is measured and, in the course of this, at least its middle plane (3), and/or the mid-plane of the visible face, and/or its design middle is determined;
- the material of the rim flange allowance (7) of the wheel rim blank is mechanically removed in the form of at least two recesses, wherein
at least one first recess (adjustment point (8)) is inserted into the material, wherein the depth and/or position of each adjustment point (8) is selected such that upon application of the wheel rim blank onto the clamping apparatus and contact of the recess(es) with at least one support point of the clamping apparatus, the previously determined middle plane (3) and/or the mid-plane of the visible face is oriented in parallel to the clamping apparatus, and
at least one second recess (centering point (9)) is inserted into the material, wherein the depth and/or position of each centering point (9) is selected such that upon clamping of the wheel rim blank into the corresponding clamping points of the clamping apparatus, the design middle of the wheel rim is oriented to the axle center,
**characterized in that** the adjustment points (8) are arranged offset to the centering points (9) in the circumferential direction of the wheel rim.

2. The method according to claim 1, **characterized in that** the at least one recess is shaped punctate or planar.

3. The method according to claim 2, **characterized in that** the adjustment points (8) and/or the centering points (9) are inserted in the region of the outer and/or inner rim flange (1, 2), wherein preferably the excess material of the rim flange allowance (7) is preferred as the material to be removed for the adjustment points (8) and/or the centering points (9).

4. The method according to one of claims 2 or 3, **characterized in that** the adjustment points (8) are arranged offset to one another and in particular adjacent adjustment points (8) are positioned such with respect to one another that, as viewed from the center of the wheel rim, they form an angle of at least 10 degrees, preferably at least 60 degrees, more preferably between 100 and 140 degrees, and more preferably the adjustment points (8) are respectively offset to one another at the same angle that results as the quotient from 360 degrees divided by the number of adjustment points (8).

5. The method according to one of claims 2 or 3, **characterized in that** the centering points (9) are arranged offset to one another and in particular adjacent centering points (9) are positioned such with respect to one another that, as viewed from the center of the wheel rim, they form an angle of at least 10 degrees, preferably at least 60 degrees, more preferably between 100 and 140 degrees, and more preferably the centering points (9) are respectively offset to one another at the same angle resulting as the quotient from 360 degrees divided by the number of centering points (9).

6. The method according to one of claims 2 to 5, **characterized in that** the centering points (9) are positioned such with respect to adjacent adjustment points (8) that with these, as viewed from the center of the wheel rim, they from an angle of at least 5 degrees, preferably at least 30 degrees, more preferably between 50 and 70 degrees and more preferably each centering point (9) between two adjustment points (8) is positioned on the bisectrix of the angle between the two adjustment points (8).

7. The method according to one of claims 2 to 5, **characterized in that** the centering points (9) viewed radially from the center are arranged on one line with the adjustment points (8).

8. The method according to one of the preceding claims, **characterized in that** during the processing, which is carried out for the final shaping of the wheel rims, each of the recesses is removed, such that through the processing steps for the formation of the final wheel rim from the unfinished casting, none of the recesses are visible on the final wheel rim any more.

9. The method according to one of the preceding claims, **characterized in that** at least one of the recesses, in particular each of the recesses do not extend beyond the excess material of the rim flange allowance (7) and thus do not extend into the material of the final wheel rim, and in particular the first and/or second recesses are measured such that they are merely formed by removal of a part of this excess material and that no material of the subsequent wheel rim is removed for this purpose.

10. A wheel rim blank, **characterized in that** it comprises recesses formed according to a method according to one of the preceding claims.

## Revendications

1. Procédé pour l'amélioration de l'usinage d'ébauches de jantes lors d'un serrage sur un dispositif de serrage, moyennant quoi, après la fabrication de l'ébauche de jante et avant l'usinage de l'ébauche de jante à la forme finale
- l'ébauche de jante est mesurée et au moins son plan central (3) et/ou le plan central du côté visible et/ou le centre de sa forme est déterminé ;
- le matériau de l'ajout de rebord (7) de l'ébauche de jante est enlevé mécaniquement sous la forme d'au moins deux évidements,
au moins un premier évidement (point d'ajustement (8)) étant réalisé dans le matériau, la profondeur et/ou la position de chaque point d'ajustement (8) étant choisie de façon à ce que, lors de l'appui de l'ébauche de jante sur le dispositif de serrage et du contact de l'évidement ou des évidements avec au moins un point d'appui du dispositif de serrage, le plan central (3) déterminé et/ou le plan central du côté visible soit orienté parallèlement au dispositif de serrage et
au moins un deuxième évidement (point de centrage (9)) est réalisé dans le matériau, la profondeur et/ou la position de chaque point de centrage (9) étant choisie de façon à ce que, lors du serrage de l'ébauche de jante dans les points de serrage correspondants du dispositif de serrage, le centre de la forme de la jante soit orienté vers le centre de l'axe, **caractérisé en ce que** les points d'ajustement (8) sont disposés de manière décalée entre eux par rapport aux points de centrage (9) dans la direction de la circonférence de la jante.

2. Procédé selon la revendication 1, **caractérisé en ce que** l'au moins un évidement présente la forme d'un point ou une forme plate.

3. Procédé selon la revendication 2, **caractérisé en ce que** les points d'ajustement (8) et/ou les points de centrage (9) sont réalisés au niveau du rebord externe et/ou interne de la jante (1, 2), de préférence le matériau en excès de l'ajout de rebord (7) étant préféré en tant que matériau à enlever pour les points d'ajustement (8) et/ou les points de centrage (9).

4. Procédé selon l'une des revendications 2 ou 3, **caractérisé en ce que** les points d'ajustement (8) sont disposés de manière décalée entre eux et plus particulièrement des points d'ajustement (8) adjacents sont disposés les uns par rapport aux autres de façon à ce que, vus du centre de la jante, ils forment un angle d'au moins 10 degrés, de préférence d'au moins 60 degrés, plus particulièrement de préférence entre 100 et 140 degrés, et plus particulièrement de préférence les points d'ajustement (8) sont décalés entre eux du même angle, qui résulte d'une division de 360 degrés par le nombre de points d'ajustement (8).

5. Procédé selon l'une des revendications 2 ou 3, **caractérisé en ce que** les points de centrage (9) sont disposés de manière décalée entre eux et plus particulièrement des points de centrage (9) adjacents sont disposés entre eux de façon à ce que, vus du centre de la jante, ils forment un angle d'au moins 10 degrés, de préférence d'au moins 60 degrés, plus particulièrement de préférence entre 100 et 140 degrés, et plus particulièrement de préférence les points de centrage (9) sont décalés entre eux du même angle, qui résulte d'une division de 360 degrés par le nombre de points de centrage (9).

6. Procédé selon l'une des revendications 2 à 5, **caractérisé en ce que** les points de centrage (9) sont disposés par rapport aux points d'ajustement (8) adjacents, de façon à ce que, vus du centre de la jante, ils forment un angle d'au moins 5 degrés, de préférence d'au moins 30 degrés, plus particulièrement de préférence entre 50 et 70 degrés, et plus particulièrement de préférence chaque point de centrage (9) se trouve entre deux points d'ajustement (8) sur la bissectrice de l'angle entre les deux points d'ajustement (8).

7. Procédé selon l'une des revendications 2 à 5, **caractérisé en ce que** les points de centrage (9) sont disposés, vus du centre, radialement sur une ligne avec les points d'ajustement (8).

8. Procédé selon l'une des revendications précédentes, **caractérisé en ce que**, pendant l'usinage, a lieu le formage final des jantes, chacun des évidements est éliminé, de façon à ce que, du fait des étapes d'usinage pour la formation de la jante finie à partir de la pièce coulée brute, aucun évidement ne soit plus visible sur la jante finie.

9. Procédé selon l'une des revendications précédentes, **caractérisé en ce qu'**au moins un des évidements, plus particulièrement chacun des évidements ne dépasse pas du matériau en excès de l'ajout du rebord (7) et ne pénètre donc pas dans le matériau de la jante finie, et plus particulièrement les premiers et/ou deuxièmes évidements doivent être dimensionnés de façon à ce qu'ils soient formés exclusivement par enlèvement d'une partie de ce matériau en excès et à ce que le matériau de la jante ultérieure ne soit pas enlevé pour cela.

10. Ébauche de jante, **caractérisée en ce qu'**elle comprend des évidements formés selon un procédé selon l'une des revendications précédentes.
